# EUROPÄISCHE PATENTSCHRIFT

(11) **EP 1 004 130 B1**
(45) Veröffentlichungstag und Bekanntmachung des Hinweises auf die Patenterteilung: **23.01.2002**
(21) Anmeldenummer: 98942589.7
(22) Anmeldetag: 21.07.1998
(51) Int. Cl.: H01H 85/00

(54) **SICHERUNGSELEMENT FÜR ELEKTRISCHE ANLAGEN SOWIE VERFAHREN UND SCHALTUNGSANORDNUNG ZUM BETREIBEN EINES SICHERUNGSELEMENTS**
FUSE ELEMENT FOR ELECTRICAL SYSTEMS AND A METHOD AND CIRCUIT FOR OPERATING A FUSE ELEMENT
ELEMENT FUSIBLE POUR INSTALLATIONS ELECTRIQUES, AINSI QUE PROCEDE ET CIRCUIT POUR ACTIONNER UN ELEMENT FUSIBLE

(30) Priorität: 16.08.1997 DE 19735546
(43) Veröffentlichungstag der Anmeldung: 31.05.2000
(73) Patentinhaber: DaimlerChrysler AG, 70567 Stuttgart (DE)
(72) Erfinder: MÄCKEL, Rainer, D-53639 Königswinter (DE); SCHULZ, Thomas, D-72669 Unterensingen (DE); GRUENINGER, H., Wolfgang, D-65830 Kriftel (DE)
(74) Vertreter: Maute, Hans-Jürgen, Dipl.-Ing.
(86) Internationale Anmeldenummer: EP9804573
(87) Internationale Veröffentlichungsnummer: WO9909574

(56) Entgegenhaltungen:
- GB-A- 1 499 616
- GB-A- 2 182 811
- US-A- 4 808 960
- US-A- 4 968 962
- US-A- 5 304 974

## Beschreibung

Die Erfindung betrifft ein Sicherungselement für elektrische Anlagen, insbesondere für Fahrzeuge, ein Verfahren zum Betreiben eines solchen Sicherungselements sowie eine geeignete Schaltungsanordnung.

Insbesondere in Kraftfahrzeugen werden zur Absicherung von elektrischen Leitungen Schmelzsicherungen eingesetzt. Die Absicherung mit Schmelzsicherungen hat den Nachteil, daß sich mit diesen Sicherungen kein optimaler Leitungsschutz erreichen läßt.

Beim Auftreten kurzfristig anliegender Überströme kann eine übliche elektrische Leitung im Fahrzeug wesentlich mehr Strom tragen als die Schmelzsicherung, so daß für kurzzeitige Überströme eine übliche Schmelzsicherung unterdimensioniert ist. Im Bereich länger andauernder Überströme schaltet die Sicherung dagegen zu spät ab, so daß in diesem Fall eine elektrische Leitung und/oder Verbraucher nicht ausreichend geschützt ist. Bei einem Überstrom von 35% gegenüber dem nominalen Auslösestrom der Sicherung kann es bis zu einer halben Stunde dauern, bis eine Schmelzsicherung tatsächlich auslöst. Bei einem Überstrom von 250%, der dem 3,5-fachen nominalen Auslösestrom der Sicherung entspricht, kann es noch 5 Sekunden bis zur Sicherungsauslösung dauern.

Ein weiteres Problem ist dadurch gegeben, daß bei Sicherungswerten mit hohen nominalen Auslösestromwerten der tatsächliche Auslösestrom wesentlich höher sein muß, um die Si- cherung ausreichend schnell auszulösen. Für eine Schmelzsicherung mit einem nominalen Auslösestrom von 250 A oder mehr bedeutet dies, daß bei ei-nem Überstrom von 250% demnach ein Strom von mindestens 875 A fließen muß, um die Sicherung ausreichend schnell auszulösen. Bei einem Kurzschluß mehrerer Leitungen, insbesondere in einem Fahzeug bei einem Unfall, kann nicht sichergestellt werden, daß die Batterie überhaupt einen ausreichend großen Strom zum Auslösen einer solchen Schmelzsicherung zur Verfügung stellen kann.

In der DE-A1-195 27 997 ist eine Anordnung offenbart, mit der das Auslösen einer Schmelzsicherung besser vorgebbar ist. Dabei wird der elektrische Strom durch die Sicherung gemessen und parallel zu der abzusichernden Leitung ein Thyristor geschaltet, der im Fall eines Überstromes definiert eingeschaltet werden kann. Sobald ein Schwellwert überschritten ist, schaltet der Thyristor ein und erzeugt einen zusätzlichen, hohen Überstrom in der Sicherung, der zum Auslösen der Sicherung führen soll. Der Nachteil dieser Anordnung besteht darin, daß für große Sicherungswerte mit hohen nominalen Auslöseströmen große Thyristoren mit Nennströmen von einigen hundert Ampere bzw. mehrere Thyristoren paral-lel eingesetzt werden müssen. Es ist nicht sichergestellt, daß die notwendigen Nennströme für das Auslösen entsprechender Thyristoren überhaupt von der Batterie aufgebracht werden können. Beheizte Sicherungseiemente sind grundsätzlich beispielsweise der AT 383 697, der DE 195 27 997 sowie der US 53 04 974 und US 48 07 082 zu entnehmen, deren Verschaltung jedoch äußerst nachteilig ist, da sie im allgemeinen den Nutzstromkreis dauerhaft belasten.

Aus der GB 2182811 A ist eine gattungsbildende Patentanmeldung bekannt. Aus der GB 2182811 A ist bekannt, ein Sicherungselement für einen Stromkreis, auch geeignet für die Verwendung in Fahrzeugen, mit einer Schmelzsicherung, die bei einer über dem Nennstrom liegenden Strombelastung des Stromkreises bleibend unterbricht, wobei das Sicherungselement thermisch mit einem zuätzlichen Heizwiderstand gekoppelt ist und das Heizelement das Sicherungselement erwärmt und die Trennung des Schmelzleiters beeinflußt. Das Heizelement und das Sicherungselement befinden sich in Serie in dem abzusichernden Stromkreis und sind mit den gleichen Kontakten im Stromkreis angeschlossen. Nachteilig ist daher, daß das Heizelement nicht unabhängig vom Schmelzleiterstrom beeinflußt werden kann. In diesem Zusammnehang ist besonders nachteilig, daß das Heizelement über keinen getrennten zusätzlichen Steueranschluß verfügt und nicht schaltbar ist.

Erfindungsgemäße Aufagbe ist es daher ein Sicherungselement, ein Verfahren zum Betrieb des Sicherungselementes und eine Schaltungsanordnung anzugeben, die eine unabhängige Beeinflussung des Heizelementes getrennt vom Scicherungselement erlaubt und eine Trennung des Schmelzleiters aufgrund individuell einstellbarer Parameter des Auslösestroms ermöglicht.

Die Aufgaben werden durch die Merkmale der unabhängigen Ansprüche gelöst. Weiterführende und vorteilhafte Ausgestaltungen sind den Unteransprüchen und der Beschreibung zu entnehmen.

Die Erfindung besteht darin, daß das Sicherungselement im Bereich seines Schmelzleiters durch ein zusätzliches Heizelement erwärmt wird. Der Vorteil ist, daß der Schmelzleiter, der durch einen etwaigen Stromfluß durch das Sicherungselement bereits erwärmt sein kann, sich im Auslösefall durch Fremdbeheizung schnell über seiner Schmelztemperatur erwärmt, so daß er einen unerwünschten Stromfluß schnell unterbricht. Das Heizelement ist gesteuert einschaltbar.

Günstigerweise steht am Heizelement ein großer Spannungsabfall, der größer ist als der Spannungsabfall am Schmelzleiter, insbesondere die Bordnetzspannung oder die Batteriespannung, zur Verfügung.

Vorteilhafterweise weist das Heizelement einen elektrischen Heizwiderstand auf Bevorzugt ist der Heizwiderstand ein Widerstandsdraht oder ein Dickschichtwiderstand oder ein Folienwiderstand. Vorzugsweise weist der Heizwiderstand im Bereich seines höchsten elektrischen Widerstands ein metallisches Element auf. Ein weitere bevorzugte Ausführung ist, wenn der Heizwiderstand im Bereich seines höchsten elektrischen Widerstands ein Halbleitermaterial aufweist. Dies hat den Vorteil, daß der Heizwiderstand in unmittelbarem Kontakt mit dem Schmelzleiter sein kann, während sonst eine Isolierung oder eine andere Beabstandung notwendig ist.

Eine besonders günstige Ausführung ist, wenn das Heizelement durch ein exothermes Reaktionselement, insbesondere eine Schweißfolie, gebildet ist. Bevorzugt besteht die Schweiß-folie aus einer Schichtfolge einer Mehrzahl von abwechselnd angeordneten, sehr dünnen Metallfolien, bevorzugt aus Aluminium und Nickel. Der Vorteil dabei ist, daß durch ein von unerwünschten Betriebszuständen abhängiges Zündsignal eine stark exotherme Reaktion der Schweißfolie auslösbar ist, die wiederum den Schmelzleiter sehr schnell auf seine Schmelztemperatur aufheizt und damit der Stromkreis unterbrochen wird.

Ein besonders vorteilhafte Ausgestaltung besteht darin, das Heizelement mit einer Steuerungseinheit zur variablen Einschaltung und/oder Steuerung der Heizleistung zu verbinden. Dies ermöglicht es, mit demselben Sicherungselement unterschiedliche Charakteristiken und auch unterschiedliche nominale Auslöseströme nachzubilden, so daß die Auslösekurve des Sicherungselements dynamisch veränderbar ist.

Im folgenden sind die Merkmale, soweit sie für die Erfindung wesentlich sind, eingehend erläutert und anhand von einer Prinzipskizze einer Schaltung näher beschrieben.

Übliche Schmelzsicherungen gemäß dem Stand der Technik bestehen aus einem definiert geformten elektrischen Leiter mit einem definierten Widerstand. Durch den Stromfluß wird der Leiter erhitzt, bevorzugt in einem speziell präparierten Bereich, im folgenden Schmelzleiter genannt, und erreicht, je nach Sicherungstyp, zwischen 420°C und über 1000°C sei- nen Schmelzpunkt. Das Aufschmelzen des Schmelzleiters führt zu einer Unterbrechung des Stromkreises. Häufig wird eine Zinnpille auf den Schmelzleiter aufgebracht, welche ober- halb von 230°C aufschmilzt und eine Reaktion mit dem Schmelzieitermaterial eingeht, die eine Erniedrigung des Schmelzpunktes des Schmelzleiters zur Folge hat.

Durch einen dem Verbraucher parallelgeschalteten Thyristor gemäß dem aus der DE-A1 195 27 997 bekannten Stand der Technik wird der Schmelzleiter mit einem zusätzlichen, hohen Strom belastet, der. durch zusätzliche ohmsche Verluste den Schmelzleiter zum Durch-schmelzen bringt, ohne daß die Leitung mit dem zusätzlich auftretenden Überstrom belastet wird.

Die erfindungsgemäße Lösung besteht darin, das Sicherungselement, bevorzugt den Schmelzleiter, mit Hilfe einer Fremdbeheizung zu erwärmen und so bei einem Nennstrom, der kleiner als oder höchstens gleich groß wie sein bauartbedingter nominaler Auslösestrom ist, zuverlässig auszulösen. Die Fremdbeheizung besteht aus einem Heizelement, welches vorzugsweise nach Auftreten eines Auslösesignals erhitzt werden kann. Eine vorteilhafte Ausführung ist, das Heizelement durch Joulesche Wärmeentwicklung einer Widerstandsheizung zu erhitzen. Eine weitere vorteilhafte Ausführung ist, Wärme im Heizelement durch eine exotherme, sich selbst erhaltende Reaktion zu erzeugen. Günstig bei einer Widerstandheizung ist, wenn die gesamte Bordnetzspannung, insbesondere die Batteriespannung, zum Erhitzen des Heizelementes verwendet werden kann. Der Vorteil ist, daß das Heizelement deshalb bereits mit einem geringen Strom heiß genug werden kann, um den Schmelzleiter mittelbar oder unmittelbar zum Auslösen zu bringen. Ein hoher Strom durch das Sicherungs-element kann demnach durch einen geringeren Strom durch das Heizelement abgeschaltet werden.

Eine vorteilhafte Ausführung ist, den Schmelzleiter durch Wärmeeinwirkung unmittelbar durchzuschmelzen. Der Vorteil dieser Lösung ist, daß der Schmelzleiter durch die volle Netzspannung versorgt werden kann, während der Spannungsabfall am Sicherungselement selbst auf höchstens 200 mV begrenzt werden kann. Ein gegenüber dem nominalen Auslösestrom der Sicherung wesentlich geringerer Strom kann im Heizelement demnach dieselbe Heizleistung entwickeln wie ein Überstrom in der Größenordnung des Auslösestroms im Sicherungselement. Das Verhältnis der Ströme, die durch das Sicherungselement und durch das Heizelement fließen, verhalten sich bevorzugt wie das reziproke Spannungsverhältnis am Sicherungselement und am Heizelement. Bei einem Spannungsabfall von 12 V über dem Heizelement und einem Spannungsabfall von 200 mV über der Sicherung ergibt sich eine Strom durch das Heizelement, der sechzigmal kleiner ist als der Strom durch das Sicherungselement. Damit ist sichergestellt, daß insbesondere eine Fahrzeugbatterie den Auslösestrom für die Schmelzsicherung aufbringen kann.

Eine weitere vorteilhafte Ausführung ist, wenn das Heizelement die Sicherung selbst zusätzlich erwärmt, ohne den. Schmelzleiter unmittelbar durchzuschmelzen. Die. thermische Abstrahlung des Heizelements wärmt die Schmelzsicherung vor und bringt insbesondere den Schmelzleiter in die Nähe seiner Schmelztemperatur, so daß ein geringer Überstrom im Sicherungselement bereits zur zuverlässigen Auslösung des Sicherungselements führt.

Günstig ist auch, wenn das Sicherungselement durch den Stromfluß im Stromkreis vorgewärmt wird und im Auslösefall durch einen zusätzlichen Stromfluß durch den Heizleiter und/oder durch dessen Wärmeabstrahlung durchgeschmolzen wird.

Ganz besonders vorteilhaft ist, wenn Mittel vorgesehen sind, die das Heizelement zu definierten Zeitpunkten und/oder in definierten Zuständen einschaltbar macht. Das Heizelement wird vorzugsweise erst dann eingeschaltet, wenn ein Fehlerfall ansteht. Als Einschaltkriteri- en können unterschiedliche Zustände, insbesondere Fehlersignale, dienen, vorzugsweise Überstromsignale zur Überstromüberwachung eines Verbrauchers und/oder Temperatursignale zur Übertemperaturüberwachung eines Verbrauchers und/oder Spannungssignale und/oder Crash-Signale, insbesondere, um elektrische Verbraucher bei einem Unfall eines Fahrzeugs vom Bordnetz zu trennen. Durch das gesteuerte Einschalten des Heizelements ist sichergestellt, daß im Normalbetrieb die Schmelzsicherung nicht versehentlich ausgelöst wird, im Fehlerfall dagegen sehr schnell und zuverlässig auslösbar ist.

Ein Vorteil der erfindungsgemäßen Lösung besteht darin, daß die Anforderungen an das ursprüngliche Sicherungselement hinsichtlich von Auslegungstoleranzen verringert werden können. Ein weiterer Vorteil ist darin zu sehen, daß der ohmsche Widerstand des Sicherung-selements gesenkt werden kann, da das Sicherungselement nicht mehr selbst die ohmsche Verlusteistung zum Auslösen des Schmelzleiters erzeugen muß. Dadurch wird der Spannungsabfall von der Batterie bis zum Verbraucher vorteilhaft verringert.

Ein großer Vorteil der Erfindung ist die Möglichkeit, mit dem gleichen Sicherungs-element verschiedene Charakteristiken und/oder verschiedene nominale Auslöseströme nachzubil- den. Die Auslösekurve des Sicherungselements kann vorteilhaft durch eine geeignete intelligente Steuereinheit dynamisch verändert werden. Dies hat die günstige Folge, daß das glei-che Sicherungselement für unterschiedliche Belastungen eines elektrischen Leiters verwen- det werden kann, insbesondere bei unterschiedlichen Sonderausstattugnsvarianten eines Fahrzeugs und/oder bei verschiedenen Fahrzeugen. Damit ist es möglich, unterschiedliche Fahrzeuge mit einer relativ vereinheitlichten elektrischen Schutzausrüstung zu versehen, was die Fertigung sehr vereinfacht und Kostenvorteil bringt.

Vorteilhafterweise können mehrere solcher erfindungsgemäßen Sicherungselemente bevorzugt über Mehrfachschalter angesteuert werden. Ein bevorzugter Heizleiter des Heizelements ist ein Widerstandsdraht oder ein Folienwiderstand oder ein Dickschichtwiderstand oder ein Kohlewiderstand oder ein sonstiges Element, welches bei elektrischem Stromfluß eine für ein Heizelement ausreichende Joulesche Wärme entwickelt. Zweckmäßigerweise ist ein solcher bevorzugter Heizleiter nicht in unmittelbarem Kontakt mit dem Heizleiter, insbesondere beabstandet zum Schmelzleiter. Vorzugsweise ist eine elektrische Isolierung zwischen Heizleiter und Schmelzleiter angeordnet. Zweckmäßigerweise ist die Isolierung hoch wärmeleitfähig; besonders geeignet sind Materialien wie AlN und/oder Al₂O₃ und/oder Halbleitermaterialien. Vorteilhaft kann die Verwendung eines Halbleiters als Heizleiter sein, da dieser in unmittelbarem Kontakt mit dem Schmelzleiter sein kann, ohne daß dieser kurzgeschlossen wird.

Die elektrische Isolierung zwischen Heizleiter und Schmelzleiter ermöglicht so die Ausnutzung der vollen Netzspannung für den Heizleiter. Dabei kann das Heizelement einseitig mit der Sicherung elektrisch verbunden sein. Zweckmäßigerweise ist die einseitige Verbindung auf der Bordnetzseite der Sicherung entfernt vorn und parallel zum Verbraucher.

Ein weiteres bevorzugtes Heizelement besteht aus einem exothermen Reaktionselement, insbesondere einer Schweißfolie, die durch Einwirkung eines Zündimpulses eine stark exotherme Reaktion auslöst und in sehr kurzer Zeit sehr hohe Temperaturen erreicht. Der Zündimpuls des Reaktionselements kann vorteilhaft mit einem Transistor oder einem Stromstoß aus einem Kondensator erzeugt werden. Weitere vorteilhafte Möglichkeiten zur Erzeugung eines Zündimpulses sind thermische Aktivierung und/oder Lichtblitz, insbesondere im ultravioletten Bereich, und/oder Zündfunken, insbesondere aus einer Batterie. Hierbei ist es lediglich notwendig, das Reaktionselement lokal zu erwärmen, um die Reaktion zu zünden.

Die Schweißfolie besteht vorzugsweise aus einer Serie von sehr dünnen Metallfolien, insbesondere aus Aluminium- und Nickelfolien, die alternierend aufeinander gestapelt sind. Eine typische Schichtdicke der einzelnen Folien liegt im Bereich von wenigen Atomlagen bis 100 Atomlagen. Durch einen thermischen Puls und/oder einen Lichtblitz und/oder einen Zünd- funken, insbesondere aus einer Batterie, reagieren die beiden Konstituenten miteinander und erwärmen sich typischwerweise in wenigen Millisekunden von 25°C auf über 1000°C. Auch andere Materialkombinationen, die eine derartige exotherme Reaktion eingehen, sind als Reaktionselemente in Folien- oder Pulverform geeignet, insbesondere etwa eine Kombination von Eisen und Aluminium. Dabei kann das Reaktionselement den Schmelzleiter umgeben, insbesondere kann ein pulverförmiges Reaktionsmaterial den Schmelzleiter in einer Kapsel umgeben oder benachbart zum Schmelzleiter in einer Kapsel angeordnet sein.

Der Vorteil hierbei ist, daß diese Ausführung eines Heizelements keine eigene Stromversorgung benötigt, sondern nur einen geeigneten Zündimpuls. Vorteihaft ist, daß sich der Zünd-impuls durch eine geeignete Ansteuerung erzeugen und/oder steuern läßt, so daß eine zu- verlässige und schnelle Auslösung im Fehlerfall ermöglicht ist.

Des weiteren wird eine Schaltungsanordnung eines Sicherungselementes für einen Stromkreis, insbesondere in Fahrzeugen, mit einer Schmelzsicherung vorgestellt, die bei einer über dem Nennstrom liegenden Strombelastung des Stromkreis diesen bleibend unterbricht und die zwischen einer Stromquelle, insbesondere einer Batterie, und wenigstens einem Verbraucher angeordnet ist, und mit einem zusätzlichen Heizelement, welches thermisch mit der Schmelzsicherung gekoppelt ist. Erfindungswesentlich ist dabei, daß das Heizelement bordnetzseitig von der Stromquelle aus hinter der Schmelzsicherung und parallel zu den Verbrauchern über ein Schaltelement, welches von einer Steuerungseinheit zur Steuerung der Heizleistung und/oder einer Auslöseeinheit ansteuerbar ist, auf Masse geschlossen wird. Dadurch wird erreicht, daß
a) das Heizelement im Normalbetrieb den Stromfluß zu den Verbrauchern nicht belastet,
b) im Auslösefall der Strom durch das Heizelement den Strom durch das Sicherungselement noch zusätzlich erhöht und das Durchschmelzen somit zusätzlich beschleunigt und
c) mit dem Durchschmelzen des Sicherungselements auch das Heizelement stromlos geschaltet wird.

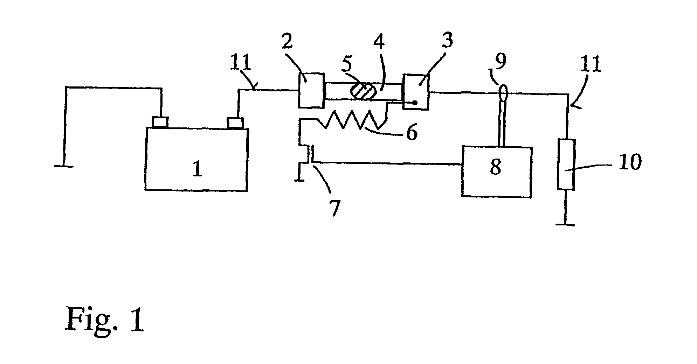

In Fig. 1 ist eine erfindungsgemäße Anordnung dargestellt, die auch alle Merkmale der Schaltungsanordnung aufweist. Eine Batterie 1 versorgt in ei-nem Bordnetz einen Verbraucher 10. Zwischen Batterie 1 und Verbraucher 10 ist ein Sicherungselement angeordnet, welches einen batterieseitigen Anschluß 2, einen bordnetzseitigen Anschluß 3 und einen dazwischenliegenden Schmelzleiter 4 aufweist. In diesem Beispiel ist zweckmäßigerweise noch zusätzlich eine Zinnperle 5 auf dem Schmelzleiter 4 angeordnet. Der Schmelzleiter 4 und die Zinnperle 5 sind thermisch mit einem elektrisch dagegen iso- lierten Heizelement 6 in Verbindung. Dieses Heizelement 6 liegt elektrisch in Serie mit ei- nem steuerbaren Schaltelement 7, beispielsweise dem Drainanschluß eines Mosfets, welcher sourceseitig mit Masse verbunden ist. Der zweite Anschluß des Heizelements 6 ist mit dem bordnetzseitigen Anschluß 3 des Sicherungselements verbunden.

Mit Hilfe eines Stromsensors 9 und einer Auswerte- und Auslöseeinheit 8 kann der Strom in der Leitung 11 bestimmt werden. In der Auswerteeinheit ist eine Auslösekurve des Sicherungselements abgelegt. Im einfachsten Fall kann dies ein Schwellwert und/oder ein Strom/Zeit-Verhalten des Sicherungselements sein.

Übersteigt der aktuelle Stromwert diese Auslösekurve, so schaltet die Einheit 8 das Bauelement 7 ein, so daß ein Strom durch das Heizelement 6 fließt und dieses sehr schnell er- wärmt. Der Schmelzleiter 4 der Sicherung wird nahezu ebenso schnell durch die thermische Last des Heizleiters 6 erhitzt, und die Sicherung löst als Folge aus. Da das Heizelement 6 bordnetzseitig mit der Sicherung verbunden ist, kann nach dem Auslösen der Sicherung kein Strom mehr über das Heizelement 6 fließen.

Vorteilhaft ist, wenn das Heizelement 6 bordnetzseitig an das Sicherungselement 2, 3, 4, 5 angeschlossen wird, da im Auslösefall der Heizkreis des Heizelements 6 automatisch mitgeöffnet wird.

Günstig ist auch, wenn der Heizstrom, mit dem das Heizelement erhitzt wird, auch durch den Schmelzleiter 4 und/oder das Sicherungselement 2, 3, 4, 5 fließt, da der Heizstrom dann doppelt ausgenutzt werden kann, indem der Schmelzleiter durch die Fremdbeheizung und zusätzlich durch den zusätzlichen Stromfluß erhitzt wird und so schneller über seine Schmelztemperatur erwärmt werden kann.

Zweckmäßig ist, die elektrische Versorgung der Ansteuereinheit 8 mit dem Anschluß 3 des Sicherungselements 2, 3, 4, 5 zu verbinden, da im Auslösefall die Ansteuereinheit dann automatisch vom Bordnetz abgekoppelt wird.

## Patentansprüche

1. Sicherungselement für einen Stromkreis, insbesondere in Fahrzeugen, mit einer Schmelzsicherung (4), mit einem zusätzlichen Heizelement (6), das mit der Schmelzsicherung (4) thermisch gekoppelt ist, mit einem ansteuerbaren Schaltelement (7), das elektrisch in Serie mit dem Heizelement (6) geschaltet ist, mit einem Stromsensor (9) zur Bestimmung des aktuellen Stromwerts in der Leitung (11), mit einer Auswerteeinheit (8), in der eine Auslösekurve des Sicherungselementes abgelegt ist,
**dadurch gekennzeichnet,**
**daß** das Heizelement (6) über das Schaltelement (7) mit der Auswerteeinheit (8) verbunden ist und die Auswerteeinheit (8) eine Ansteuereinheit (8) ist zur Steuerung der Heizleistung des Heizelements (6).

2. Sicherungselement nach Anspruch 1, **dadurch gekennzeichnet,**
**daß** das Heizelement (6) einen elektrischen Heizwiderstand aufweist.

3. Sicherungselement nach Anspruch 2, **dadurch gekennzeichnet,**
**daß** der Heizwiderstand im Bereich seines höchsten elektrischen Widerstands ein metal lisches Element aufweist.

4. Sicherungselement nach Anspruch 2, **dadurch gekennzeichnet,**
**daß** der Heizwiderstand im Bereich seines höchsten elektrischen Widerstands ein Halbleitermaterial aufweist.

5. Sicherungselement nach Anspruch 1, **dadurch gekennzeichnet,**
**daß** das Heizelement (6) ein exothermes Reaktionselement aufweist.

6. Sicherungselement nach Anspruch 5, **dadurch gekennzeichnet,**
**daß** das Reaktionselement eine Schweißfolie ist.

7. Sicherungselement nach Anspruch 6, **dadurch gekennzeichnet,**
**daß** die Schweißfolie eine Schichtfolge einer Mehrzahl von abwechselnd angeordneten Aluminiumfolien und Nickelfolien aufweist.

8. Sicherungselement nach einem der vorangegangenen Ansprüche, **dadurch gekennzeichnet, daß** das Heizelement (6) elektrisch gegenüber dem Schmelzleiter (4, 5) isoliert ist.

9. Verfahren zum Betreiben eines Sicherungselements nach Anspruch 1, bei dem ein Strom durch das Sicherungselement gemessen wird, wobei das Sicherungs-element bei einer über dem Nennstrom liegenden Strombelastung ausgelöst und der Stromkreis bleibend unterbrochen wird
**dadurch gekennzeichnet,**
**daß** beim Auftreten eines Fehlersignals im Stromkreis ein Heizelement (6) in der Nähe des Sicherungselements (2, 3, 4, 5) erhitzt wird, welches das Sicherungselements (2, 3, 4, 5) erwärmt und daß der Schmelzleiter (4, 5) durchschmilzt.

10. Verfahren nach Anspruch 9, **dadurch gekennzeichnet,**
**daß** ein Stromschwellwert als Fehlersignal verwendet wird.

11. Verfahren nach Anspruch 10, **dadurch gekennzeichnet,**
**daß** der Stromschwellwert aus einer Auslösekurve des Sicherungselements bestimmt wird, die in einer Auswerteeinheit (8) abgelegt ist.

12. Verfahren nach Anspruch 11, **dadurch gekennzeichnet,**
**daß** ein Temperaturschwellwert als Fehlersignal verwendet wird.

13. Verfahren nach Anspruch 9, **dadurch gekennzeichnet, daß** ein Spannungsschwellwert als Fehlersignal verwendet wird.

14. Verfahren nach Anspruch 9, **dadurch gekennzeichnet, daß** ein Aufprallsignal als Fehlersignal verwendet wird.

15. Verfahren nach einem der Ansprüche 9 bis 14, **dadurch gekennzeichnet, daß** das Heizelement (6) durch elektrischen Stromfluß unmittelbar erhitzt wird.

16. Verfahren nach einem der Ansprüche 9 bis 15, **dadurch gekennzeichnet, daß** das Heizelement (6) durch eine exotherme chemische Reaktion erhitzt wird.

17. Verfahren nach einem der Ansprüche 9 bis 16, **dadurch gekennzeichnet, daß** das Heizelement (6) bordnetzseitig angeschlossen wird, so daß ein Stromfluß durch das Heizelement (6) im Auslösefall gleichzeitig mit dem Bordnetz unterbrochen wird.

18. Verfahren nach einem der Ansprüche 9 bis 17, **dadurch gekennzeichnet, daß** ein Stromfluß durch das Heizelement (6) durch das Sicherungselement (2, 3, 4, 5) geleitet wird.

19. Verfahren nach einem der Ansprüche 9 bis 18, **dadurch gekennzeichnet, daß** die Ansteuereinheit (8) durch den Kontaktpunkt (3) elektrisch versorgt wird.

20. Schaltungsanordnung eines Sicherungselementes (2,3,4,5) für einen Stromkreis, insbesondere in Fahrzeugen,
a) mit einer Schmelzsicherung (4), die bei einer über dem Nennstrom liegenden Strombelastung den Stromkreis bleibend unterbricht und die zwischen einer Stromquelle (1), insbesondere einer Batterie, und wenigstens einem Verbraucher (10) angeordnet ist, und
b) mit einem zusätzlichen Heizelement (6), welches thermisch mit der Schmelzsicherung (4) gekoppelt ist,
**dadurch gekennzeichnet, daß**
c) das Heizelement (6) bordnetzseitig von der Stromquelle (1) aus hinter der Schmelzsicherung (4) und parallel zu den Verbrauchern (10) über ein Schaltelement (7), welches von einer Steuerungseinheit zur Steuerung der Heizleistung und/oder einer Auslöseeinheit (8, 7) ansteuerbar ist, auf Masse geschlossen wird,
wobei die Steuerungs-, bzw. Auslöse einheit in Abhängigkeit des aktuellen Stromwertes im Stromkreis steuert, bzw. auslöst.

## Claims

1. Protective element for a circuit, particularly in motor vehicles, with a fuse (4), an additional heating element (6) thermally coupled with the fuse (4), a controllable switching element (7) electrically connected in series with the heating element (6), a current sensor (9) for determining the actual current in the line (11) and an evaluating unit (8) in which a trigger curve of the protective element is filed, **characterised in that** the heating element (6) is connected with the evaluating unit (8) by way of the switching element (7) and the evaluating unit (8) is a control unit (8) for controlling the heating power of the heating element (6).

2. Protective element according to claim 1, **characterised in that** the heating element (6) is an electrical heating resistance.

3. Protective element according to claim 2, **characterised in that** the heating resistance has a metallic element in the region of its highest electrical resistance.

4. Protective element according to claim 2, **characterised in that** the heating resistance has a semiconductor material in the region of its highest electrical resistance.

5. Protective element according to claim 1, **characterised in that** the heating element (6) is an exothermic reaction element.

6. Protective element according to claim 5, **characterised in that** the reaction element is a weld foil.

7. Protective element according to claim 6, **characterised in that** the weld foil comprises a layer sequence of a plurality of aluminium foils and nickel foils arranged in alternation.

8. Protective element according to one of the preceding claims, **characterised in that** the heating element is electrically insulated relative to the fusible conductor.

9. Method of operating a protective element according to claim 1, in which a current through the protective element is measured, wherein the protective element is triggered at a current loading lying above the nominal current and the current circuit is permanently interrupted, **characterised in that** on occurrence of a fault signal in the circuit a heating element (6) in the vicinity of the protective element (2, 3, 4, 5) is heated, which heats the protective element (2, 3, 4, 5) and that the fuse conductor (4, 5) melts through.

10. Method according to claim 9, **characterised in that** a threshold value is used as fault signal.

11. Method according to claim 10, **characterised in that** a threshold value is determined from a trigger curve, which is filed in an evaluating unit (8), of the protective element.

12. Method according to claim 11, **characterised in that** a temperature threshold value is used as fault signal.

13. Method according to claim 9, **characterised in that** a voltage threshold value is used as fault signal.

14. Method according to claim 9, **characterised in that** an impact signal is used as fault signal.

15. Method according to one of claims 9 to 14, **characterised in that** the heating element (6) is directly heated by electrical current flow.

16. Method according to one of claims 9 to 15, **characterised in that** the heating element (6) is heated by an exothermic chemical reaction.

17. Method according to one of claims 9 to 16, **characterised in that** the heating element (6) is connected on the side of the on-board mains so that a current flow through the heating element (6) is interrupted in the trigger case simultaneously with the on-board mains.

18. Method according to one of claims 9 to 17, **characterised in that** a current flow through the heating element (6) is conducted by the protective element (2, 3, 4, 5).

19. Method according to one of claims 9 to 18, **characterised in that** the control unit (8) is electrically supplied through the contact point (3).

20. Circuit arrangement of a protective element (2, 3, 4, 5) for a current circuit, particularly in motor vehicles,
a) with a fuse (4) which is permanently interrupted in the case of a current loading of the current circuit lying above the nominal current and which is arranged between a current source (1), particularly a battery, and at least one load (10), and
b) with an additional heating element (6) which is thermally coupled with the fuse (4),
**characterised in that**
c) the heating element (6) on the side of the on-board mains from the current source (1) is connected to ground behind the fuse (4) and parallel to the loads (10) by way of a switching element (7) which is controllable by a control unit for control of the heating output and/or a trigger unit (8, 7), wherein the control unit or trigger unit is controlled or triggered, respectively, in dependence on the actual current value in the current circuit.

## Revendications

1. Elément de protection pour un circuit, en particulier dans des véhicules, équipé d'un fusible (4), d'un élément chauffant supplémentaire (6), qui est couplé thermiquement avec le fusible (4), d'un élément de commutation commandé (7), qui est monté électriquement en série avec l'élément chauffant (6), d'un capteur de courant (9) en vue de la détermination de la valeur réelle du courant dans la canalisation (11), d'une unité d'évaluation (8), dans laquelle est mémorisée une courbe de déclenchement de l'élément de protection, **caractérisé en ce que** l'élément chauffant (6) est relié par l'intermédiaire de l'élément de commutation (7) à l'unité d'évaluation (8) et l'unité d'évaluation (8) est une unité de commande (8) en vue de la commande de la puissance de chauffage de l'élément chauffant (6).

2. Elément de protection selon la revendication 1,
**caractérisé en ce que** l'élément chauffant (6) comporte une résistance chauffante électrique.

3. Elément de protection selon la revendication 2,
**caractérisé en ce que** la résistance chauffante présente un élément métallique à proximité de sa résistance électrique maximale.

4. Elément de protection selon la revendication 2,
**caractérisé en ce que** la résistance chauffante présente un matériau semiconducteur à proximité de sa résistance électrique maximale.

5. Elément de protection selon la revendication 1,
**caractérisé en ce que** l'élément chauffant (6) comporte un élément à réaction exothermique.

6. Elément de protection selon la revendication 5,
**caractérisé en ce que** l'élément de réaction est une feuille soudée.

7. Elément de protection selon la revendication 6,
**caractérisé en ce que** la feuille soudée comporte un stratifié d'une pluralité de feuilles d'aluminium et de nickel alternées.

8. Elément de protection selon l'une des revendications précédentes, **caractérisé en ce que** l'élément chauffant (6) est isolé électriquement vis-à-vis du fil fusible (4, 5).

9. Procédé d'utilisation d'un élément de protection selon la revendication 1, dans lequel un courant pour l'élément de protection est mesuré, l'élément de protection est déclenché dans le cas d'une surintensité dépassant le courant nominal et le circuit est interrompu en permanence,
**caractérisé en ce que** lors de l'apparition d'un signal de défaut dans le circuit un élément chauffant (6) à proximité de l'élément de protection (2, 3, 4, 5) est chauffé, qui échauffe l'élément de protection (2, 3, 4, 5) et **en ce que** le fil fusible (4, 5) est fondu.

10. Procédé selon la revendication 10, **caractérisé en ce qu'**une valeur de seuil de courant est utilisée en tant que signal de défaut.

11. Procédé selon la revendication 10, **caractérisé en ce que** la valeur de seuil du courant est déterminée à partir d'une courbe de déclenchement de l'élément de protection, qui est mémorisée dans une unité d'évaluation (8).

12. Procédé selon la revendication 11, **caractérisé en ce qu'**une valeur de seuil de température est utilisée en tant que signal de défaut.

13. Procédé selon la revendication 9, **caractérisé en ce qu'**une valeur de seuil de tension est utilisée en tant que signal de défaut.

14. Procédé selon la revendication 9, **caractérisé en ce qu'**un signal de choc est utilisé en tant que signal de défaut.

15. Procédé selon l'une des revendications 9 à 14,
**caractérisé en ce que** l'élément chauffant (6) est chauffé directement par circulation de courant électrique.

16. Procédé selon l'une des revendications 9 à 15,
**caractérisé en ce que** l'élément chauffant (6) est chauffé par une réaction chimique exothermique.

17. Procédé selon l'une des revendications 9 à 16,
**caractérisé en ce que** l'élément chauffant (6) est relié au réseau de bord, de sorte qu'une circulation de courant à travers l'élément chauffant (6) est interrompue en cas de déclenchement simultanément avec le réseau de bord.

18. Procédé selon l'une des revendications 9 à 17,
**caractérisé en ce qu'**une circulation de courant à travers l'élément chauffant (6) est provoquée par l'élément de protection (2, 3, 4, 5).

19. Procédé selon l'une des revendications 9 à 18,
**caractérisé en ce que** l'unité de commande (8) est alimentée électriquement par le point de contact (3).

20. Montage d'un élément de protection (2, 3, 4, 5) pour un circuit, en particulier dans des véhicules,
a) équipé d'un fusible (4), qui interrompt en permanence le circuit dans le cas d'une surintensité dépassant le courant nominal et qui est disposé entre une source de courant (1), en particulier une batterie, et au moins un appareil d'utilisation (10), et
b) équipé d'un élément chauffant supplémentaire (6), qui est couplé thermiquement avec le fusible (4),
**caractérisé en ce que**
c) l'élément chauffant (6) côté réseau de bord est relié à la masse depuis la source de courant (1) en aval du fusible (4) et en parallèle avec les appareils d'utilisation (10) par l'intermédiaire d'un élément de commutation (7), qui peut être commandé par une unité de commande en vue de la commande de la puissance de chauffage et/ou d'une unité de déclenchement (8), l'unité de commande ou de déclenchement commandant ou déclenchant en fonction de la valeur réelle du courant dans le circuit.
